# EUROPÄISCHE PATENTSCHRIFT

(11) **EP 2 218 317 B1**
(45) Veröffentlichungstag und Bekanntmachung des Hinweises auf die Patenterteilung: **23.11.2011**
(21) Anmeldenummer: 10401022.8
(22) Anmeldetag: 11.02.2010
(51) Int. Cl.: A01C 15/00, A01C 17/00

(54) **Schleuderstreuer**
Centrifugal spreader
Epandeur d'engrais centrifuge

(30) Priorität: 17.02.2009 DE 102009009280
(43) Veröffentlichungstag der Anmeldung: 18.08.2010
(73) Patentinhaber: Amazonen-Werke H. Dreyer GmbH & Co. KG, 49205 Hasbergen (DE)
(72) Erfinder: Johannaber, Stefan Jan, 49536 Lienen (DE); Walter, Achim, 49078 Osnabrück (DE)

(56) Entgegenhaltungen:
- EP-A1- 0 410 312
- EP-A1- 0 857 409
- EP-A1- 1 902 607
- DE-A1- 1 582 032

## Beschreibung

Die Erfindung betrifft einen Schleuderstreuer gemäß des Oberbegriffes des Patentanspruches 1.

Ein derartiger Schleuderstreuer ist beispielsweise durch die EP 17 38 632 B1 bekannt geworden. Bei diesem Schleuderstreuer sind Einstellelemente vorhanden. Diese Einstellelemente sind gegenüber an dem Vorratsbehälter befestigten ausgebildeten und die Einstellskala aufweisenden Vorrichtung zusammenwirkend zur Einstellung des Einstellhebels ausgebildet.

Ein Schutzbügel ist hier bei dieser Maschine nicht vorgesehen. Bei einem entsprechend dieses bekannten Standes der Technik in der Praxis verwirklichten Schleuderstreuers ist ein Schutzbügel vorhanden, an dem aber keine Einstellskalen oder Einstellelemente befestigt sind, sondern dieser Schutzbügel ist entsprechend der EP 17 38 632 B1 am Vorratsbehälter befestigt.

Ein weiterer Schlenderstrener mit den Merkmalen des Oberbegriffes des Anspruchs 1 ist aus der EP 0857409 bekannt.

Der Erfindung liegt die Aufgabe zugrunde, eine wesentlich vereinfachte und gut zugängliche Anordnung der Einstellskala und der Einstellelemente zur Einstellung zumindest eines Einstellhebels für ein Dosierorgan eines gattungsgemäßen Schleuderstreuers zu schaffen.

Diese Aufgabe wird erfindungsgemäß dadurch gelöst, dass ein Schutzelement, beispielsweise ein Schutzbügel vorgesehen ist, welcher sich in Draufsicht gesehen außerhalb der äußeren Teile der Schleuderscheiben befindet, dass die Einstellskala am Schutzbügel angeordnet ist, dass die Einstellelemente mit dem Schutzbügel zusammenwirkend zur Einstellung des Einstellhebels ausgebildet sind.

Infolge dieser Maßnahmen wird in äußerst einfacher Weise eine gut zugängliche Anordnung der Einstellskala, die zu dem preiswert zu verwirklichen ist, geschaffen.

Durch die EP 15 04 644 B1 ist ein Schleuderstreuer bekannt, der einen Schutzbügel aufweist, der sich in Draufsicht gesehen außerhalb der äußeren Teile der Schleuderscheiben befindet. Eine Anordnung und Zuordnung von Einstellskalen und Einstellhebeln für die Dosiereinrichtung ist diesem Dokument jedoch nicht zu entnehmen.

Um in einfacher Weise den Einstellhebel in die jeweils vorgesehen Position bringen zu können und in einfacher Weise fixieren zu können, ist vorgesehen, dass der Einstellhebel mittels der Einstellelemente am Schutzbügel in den vorgesehenen Einstellpositionen festsetzbar ist.

Die Einstellhebel, die in Zusammenhang mit der an dem Schutzbügel angebrachten Einstellskala einzustellen sind, können zur Festlegung der Mengeneinstellposition des Dosierorgans und/oder zur Festlegung der Position des Dosierorgans zur Schleuderscheibe ausgebildet sein.

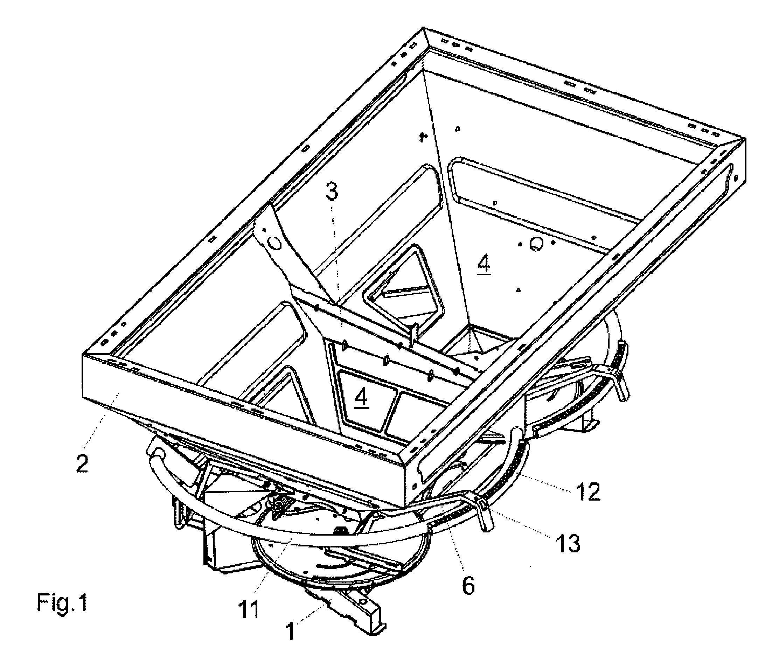

Weitere Einzelheiten der Erfindung sind der Beispielsbeschreibung und den Zeichnungen zu entnehmen. Hierbei zeigen
- Fig. 1: den Schleuderstreuer in perspektivischer Darstellung,

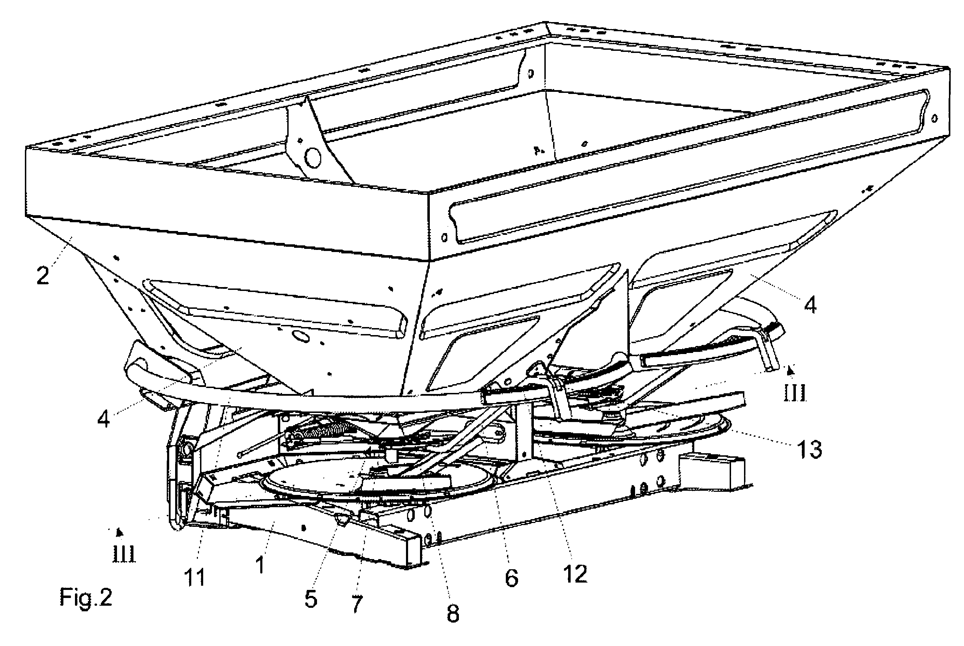

- Fig. 2: den Schleuderstreuer in anderer perspektivischer Darstellung und vergrößertem Maßstab und

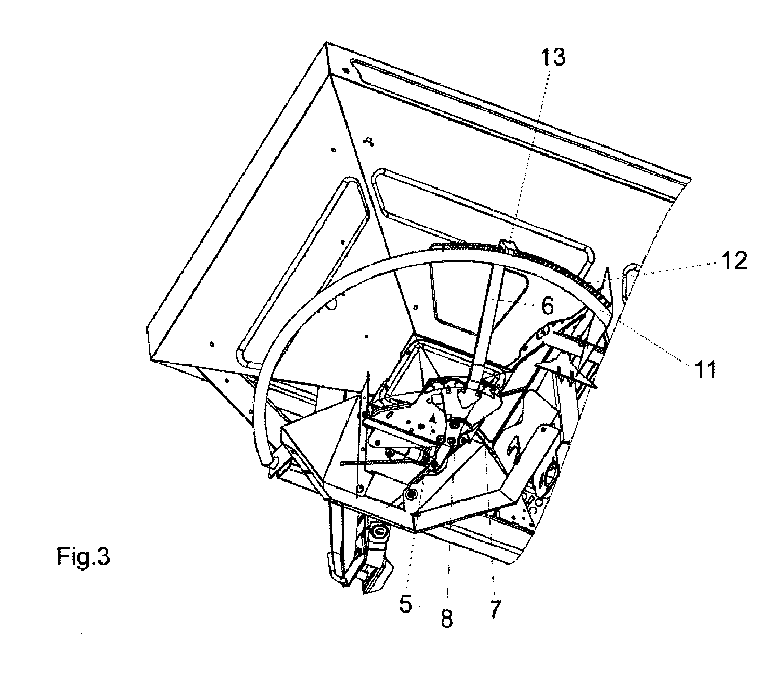

- Fig. 3: den Schleuderstreuer in perspektivischer Darstellung in der Ansicht III - III, wobei nur die linke Seite des Streuers dargestellt ist.

Der Schleuderstreuer weist einen Rahmen 1 und Vorratsbehälter 2 auf. Der untere Bereich des Vorratsbehälters 2 ist durch ein dachförmiges Mittelteil 3 in zwei Auslauftrichter 4 aufgeteilt. Die unteren Enden der Auslauftrichter 4 des Vorratsbehälters 2 werden durch ein einstellbares Dosierelement 5 verschlossen. Das Dosierelement 5 weist im Ausführungsbeispiel einen Einstellhebel 6 auf.

Das Dosierelement 5 im Ausführungsbeispiel als in einer Bodenplatte 7 angeordnete Auslauföffnung, die mit einem einstellbaren Schieber 8, dessen Öffnungsposition durch den Einstellhebel 6 bestimmt wird, ausgebildet. Über das Dosierelement 5 werden in einstellbarer Weise die sich im Vorratsbehälter 2 befindlichen Materialien einer unterhalb des Dosierelementes 5 angeordneten rotierend und mit Wurfschaufeln 9, besetzten Schleuderscheiben 10 zugeleitet. Diese Schleuderscheiben 10 werden von einer Kraftquelle rotierend angetrieben.

Des Weiteren ist dem Schleuderstreuer ein Schutzelement, welches im Ausführungsbeispiel als Schutzbügel 11 ausgebildet ist, zugeordnet. Der Schützbügel befindet sich in Draufsicht gesehen außerhalb der äußeren Teile, die von den Wurfschaufeln 9 gebildet werden, der von den Schleuderscheiben 10 beschriebenen Umlaufbahnen.

An den Schutzbügel 11 ist eine Einstellskala 12 angeordnet. Des Weiteren sind Einstellelemente 13 vorgesehen, die mit dem Schutzbügel 11 und dem Einstellhebel 6 zusammenwirken, um den Einstellhebel 6 einstellen und in vorgesehnen Positionen gegebenenfalls festsetzen zu können.

Im Ausführungsbeispiel ist der Einstellhebel 6 mittels des Einstellelementes 13 am Schutzbügel 11 in den vorgesehenen Einstellpositionen festsetzbar. Es ist jedoch auch möglich, wenn die Einstellvorrichtung zur Einstellung des Dosierorgans 5 entsprechend ausgebildet ist, dass der Einstellhebel 6 in Verbindung mit der Einstellskala 12 nur als Anzeigeelement dient. Gemäß des Ausführungsbeispieles ist lediglich ein Einstellhebel 6 vorgesehen, der mittels der an dem Schutzbügel 11 angebrachten Einstellskala 12 und mit ihm zusammenwirkenden Einstellelementen 13 zusammenwirken. Dieser Einstellhebel 6 kann zur Einstellung der Mengeneinstellposition 6 des Dosierorgans 5 oder zur Festlegung des Dosierorgans 5 gegenüber der Schleuderscheibe 10 zur Einstellung der Lage der Aufgabefläche zur Schleuderscheibe 10 ausgebildet sein.

Es ist in nicht dargestellter Weise auch möglich, dass mit dem Schutzbügel 11 und den dort angebrachten Anstellskalen 12 mehrere Einstellhebel 6 einstellbar und in ihrer Position gegebenenfalls feststellbar sind. Hierbei kann dann der eine Einstellhebel 6 zur Festlegung der Mengeneinstellung des Dosierorgans 5 und der andere Einstellhebel zur Festlegung der Position des Dosierorgans 5 zur Schleuderscheibe 10 ausgebildet sein. Hierdurch ist es dann möglich, sowohl die Ausbringmenge, wie auch die Position des auf die Schleuderscheibe auftreffenden Materials einzustellen und festzulegen.

## Patentansprüche

1. Schleuderstreuer mit einem Rahmen (1) und Vorratsbehälter (2), unter dem zumindest eine rotierend angetriebene Schleuderscheibe (10) angeordnet ist, wobei der untere Bereich des Vorratsbehälters (2) ein einstellbares Dosierelement (5) aufweist, wobei dem Dosierelement (5) zumindest ein Einstellhebel (6) mit zugeordneten Einstellelementen (13) und zumindest einer Einstellskala (12) zugeordnet ist, wobei der Einstellhebel (6) mit den Einstellelementen (13) gegenüber dem Rahmen (1) und/oder
Vorratsbehälter (2) in festlegbare Positionen einstellbar ist,
**dadurch gekennzeichnet, dass** ein Schutzelement,
beispielsweise ein Schutzbügel (11) vorgesehen ist, welcher sich in Draufsicht gesehen außerhalb der äußeren Teile (9) der Schleuderscheiben (10) befindet, dass die Einstellskala (12) am Schutzbügel (11) angeordnet ist, dass die
Einstellelemente (13) mit dem Schutzbügel (11)
zusammenwirkend zur Einstellung des Einstellhebels (6) ausgebildet sind.

2. Schleuderstreuer nach Anspruch 1, **dadurch gekennzeichnet,**
**dass** der Einstellhebel (6) mittels der Einstellelemente (13) am Schutzbügel (11) in den vorgesehenen Einstellpositionen festsetzbar ist.

3. Schleuderstreuer nach Anspruch 1, **dadurch gekennzeichnet,**
**dass** der Einstellhebel (6) zur Festlegung der Mengeneinstellposition des Dosierorgans (5) ausgebildet ist.

4. Schleuderstreuer nach Anspruch 1, **dadurch gekennzeichnet,**
**dass** der Einstellhebel (6) zur Festlegung der Position des Dosierorgans (5) zur Schleuderscheibe (10) ausgebildet ist.

5. Schleuderstreuer nach Anspruch 1, **dadurch gekennzeichnet,**
**dass** der Einstellhebel (6) zur Festlegung der Mengeneinstellposition des Dosierorgans (5) ausgebildet ist, dass der Einstellhebel (6) zur Festlegung der Position des Dosierorgans (5) zur Schleuderscheibe (10) ausgebildet ist.

## Claims

1. Centrifugal spreader having a frame (1) and supply container (2) under which at least one rotationally driven centrifugal disc (10) is arranged, wherein the lower region of the supply container (2) has an adjustable metering element (5), wherein the metering element (5) is assigned at least one adjusting lever (6) with associated adjusting elements (13) and at least one adjusting scale (12), and wherein the adjusting lever (6) can be adjusted by the adjusting elements (13) with respect to the frame (1) and/or supply container (2) into fixable positions, **characterized in that** a protective element, for example a protective bow (11), is provided which, as seen in plan view, is situated outside of the outer parts (9) of the centrifugal discs (10), **in that** the setting scale (12) is arranged on the protective bow (11), and **in that** the adjusting elements (13) are designed, while interacting with the protective bow (11), to adjust the adjusting lever (6).

2. Centrifugal spreader according to Claim 1, **characterized in that** the adjusting lever (6) can be fixed in the intended adjusting positions by means of the adjusting elements (13) on the protective bow (11).

3. Centrifugal spreader according to Claim 1, **characterized in that** the setting lever (6) is designed to fix the quantity-adjusting position of the metering member (5).

4. Centrifugal spreader according to Claim 1, **characterized in that** the adjusting lever (6) is designed to fix the position of the metering member (5) with respect to the centrifugal disc (10).

5. Centrifugal spreader according to Claim 1, **characterized in that** the adjusting lever (6) is designed to fix the quantity-adjusting position of the metering member (5), and **in that** the adjusting lever (6) is designed to fix the position of the metering member (5) with respect to the centrifugal disc (10).

## Revendications

1. Epandeur centrifuge comportant un châssis (1) et un réservoir d'alimentation (2) sous lequel tourne au moins un disque d'épandage (10) entraîné en rotation,
* la zone inférieure du réservoir (2) comportant un élément de dosage (5), réglable,
* l'élément de dosage (5) est équipé d'au moins un levier de réglage (6) avec des éléments de réglage (13) associés et au moins une échelle de réglage (12),
* le levier de réglage (6) avec les éléments de réglage (13) pouvant se régler par rapport au châssis (1) et/ou au réservoir (2) dans des positions susceptibles d'être fixées,
épandeur centrifuge **caractérisé par**
- un élément protecteur, par exemple un arceau protecteur (11) qui, en vue de dessus, se situe à l'extérieur des pièces extérieures (9) du disque d'épandage (10),
- l'échelle de réglage (12) est portée par l'arceau protecteur (11), et
- les éléments de réglage (13) sont réalisés de façon à coopérer avec l'arceau protecteur (11) pour régler le levier de réglage (6).

2. Epandeur centrifuge selon la revendication 1,
**caractérisé en ce que**
le levier de réglage (6) peut se bloquer par les éléments de réglage (13) de l'arceau protecteur (11) dans n'importe quelle position de réglage prévue.

3. Epandeur centrifuge selon la revendication 1,
**caractérisé en ce que**
le levier de réglage (6) est conçu pour fixer la position de réglage quantitatif de l'organe de dosage (5).

4. Epandeur centrifuge selon la revendication 1,
**caractérisé en ce que**
le levier de réglage (6) est conçu pour fixer la position de l'organe de dosage (5) par rapport au disque d'épandage (10).

5. Epandeur centrifuge selon la revendication 1,
**caractérisé en ce que**
le levier de réglage (6) est conçu pour fixer la position de réglage quantitatif de l'organe de dosage (5),
- le levier de réglage (6) est conçu pour fixer la position de l'organe de dosage (5) par rapport au disque d'épandage (10).
